## Europäisches Patentamt
## European Patent Office
## Office européen des brevets

(19)

(11) Numéro de publication: **0 034 517**
**B1**

(12)

# FASCICULE DE BREVET EUROPEEN

(45) Date de publication du fascicule du brevet: **18.07.84**

(51) Int. Cl.³: **G 21 C 7/14**

(21) Numéro de dépôt: **81400142.6**

(22) Date de dépôt: **30.01.81**

(54) **Mécanisme à vis et écrou pour la commande d'un réacteur nucléaire.**

(30) Priorité: **01.02.80 FR 8002273**

(43) Date de publication de la demande:
**26.08.81 Bulletin 81/34**

(45) Mention de la délivrance du brevet:
**18.07.84 Bulletin 84/29**

(84) Etats contractants désignés:
**BE CH DE GB IT LI NL SE**

(56) Documents cités:
**DE - B - 1 290 265**
**FR - A - 1 241 783**
**FR - A - 1 415 304**
**FR - A - 1 450 728**
**GB - A - 960 170**
**GB - A - 1 003 020**

**LIQUID METAL FAST BREEDER REACTOR DESIGN STUDY, vol. 1, January 1964 Rapport CEND-200 "Control assembly drive mechanism"**

(73) Titulaire: **Framatome**
**Tour Fiat 1 place de la Coupole**
**F-92400 Courbevoie (FR)**

(72) Inventeur: **Desfontaines, Guy**
**18, rue Jean Jaurès**
**92800 Puteaux (FR)**
Inventeur: **Le Helloco, Michel**
**26 avenue Raymond Poincaré**
**F-75116 Paris (FR)**

(74) Mandataire: **Bouget, Lucien et al,**
**CREUSOT-LOIRE 15 rue Pasquier**
**F-75383 Paris Cedex 08 (FR)**

Courier Press, Leamington Spa, England.

**Description**

L'invention concerne un mécanisme à vis et écrou comprenant un ensemble vis-écron pour la commande d'un réacteur nucléaire par déplacement vertical d'un ensemble absorbant les neutrons dans le coeur du réacteur et chute de l'ensemble absorbant en position d'insertion maximum sous l'effet de son propre poids, pour l'errêt d'urgence.

Pour la commande des réactants nucléaires utilisés pour la production d'énergie électrique ou la propulsion navale, il est connu d'utiliser des ensembles absorbant les neutrons qu'on déplace dans la direction verticale à l'intérieur du coeur du réacteur, depuis la partie supérieure du coeur, si bien qu'un déplacement vers le bas des ensembles absorbants permet d'obtenir une insertion plus grande des grappes de matériaux absorbant les neutrons entre les éléments combustibles constituant le coeur du réacteur et en conséquence réduit la puissance du réacteur, alors qu'un déplacement vers le haut de ces ensembles absorbants réduit leur insertion et en conséquence augmente la puissance fournie par le coeur du réacteur.

Pour effectuer ces déplacements des ensembles absorbants, appelés barres de commande dans le cas des réacteurs nucléaires à eau sous pression, on utilise généralement des mécanismes disposés à l'intérieur d'enceintes étanches fixées sur le couvercle de la cuve du réacteur à l'intérieur de laquelle se trouve le coeur. Ces mécanismes doivent faire effectuer des déplacements extrêmement précis aux barres de commande avec des maintiens en position de ces barres et doivent permettre par ailleurs de faire chuter très rapidement sous l'effet de leur poids ces barres de commande, en position d'insertion maximum dans le coeur du réacteur, en ces d'arrêt d'urgence.

Jusqu'ici, on a utilisé divers dispositifs mécaniques permettant de déplacer pas par pas les barres de commande, l'amplitude totale du déplacement vertical devant être sensiblement égale à la hauteur des éléments combustibles constituant le coeur du réacteur, c'est à dire une distance de l'ordre de 4,20 m dans le cas des réacteurs nucléaires à eau pressurisée construits actuellement.

On utilise par exemple des dispositifs à cliquets à commande électromagnétique coopérant avec une tige de commande à la partie inférieure de laquelle est fixée la barre de commande, cette tige présentant une suite d'encoches annulaires sur sa surface externe espacées d'une longueur correspondant à un pas de déplacement de la barre de commande.

L'ensemble du dispositif de commande étant placé à l'intérieur d'une enceinte étanche en communication avec l'intérieur du réacteur et prolongeant le couvercle de la cuve du réacteur vers le haut, l'amplitude totale du déplacement vertical rend nécessaire l'utilisation d'une tige de commande de grande longueur et donc d'une enceinte étanche de grande hauteur pour permettre les déplacements de cette tige.

D'autre part, l'entretien du mécanisme qu'on dispose à l'intérieur de l'enceinte étanche fixée sur le couvercle de la cuve n'est pas très facile et suppose un démontage complet de l'enceinte étanche pour accèder au mécanisme.

On connaît également (FR—A—1.241.783) un dispositif de déplacement de barres de commande utilisant une vis et un écrou, l'un des éléments de l'ensemble vis-écrou immobilisé en rotation et mobile en translation dans l'enceinte étanche renfermant le dispositif étant relié à la tige de commande sur laquelle est fixée la barre de commande.

L'autre élément de l'ensemble vis-écrou immobilisé en translation pendant le déplacement de la barre de commande est entraîné en rotation par un moteur d'entraînement fixé sur l'enceinte étanche. Des parties profilées correspondantes prévues sur un organe d'entraînement solidaire de l'arbre du moteur et sur l'élément entraîné en rotation permettent de rendre ces deux pièces solidaires en rotation tout en laissant la possibilité d'un déplacement relatif en translation.

Un tel dispositif comporte également un grappin qui permet de maintenir dans une certaine position dans la direction verticale l'élément de l'ensemble vis-écrou immobilisé en translation et de libérer l'ensemble vis-écrou pour provoquer la chute de cet ensemble et de la barre de commande pour larrêt d'urgence.

Lorsque l'ensemble vis-écrou est libéré par le grappin, on peut le séparer complètement de l'enceinte étanche.

Dans le cas d'un réactant nucléaire à eau sous pression dont la cuve est fermée par un couvercle amovible portant les enceintes étanches l'ensemble des mécanismes à vis-écrou peut être séparé des enceintes étanches en soulevant le couvercle après avoir laissé chuter toutes les barres de commande. Il est ainsi possible d'effectuer l'entretien des vis et des écrous lors des opérations de rechargement du réacteur.

Cependant, lorsque le rechargement est réalisé, il est très difficile de remettre le couvercle en place puisqu'il faut alors s'assurer que les parties profilées correspondantes de l'organe d'entraînement resté dans l'enceinte et de l'élément de l'ensemble vis-écrou sont dans des positions angulaires correspondantes pour chacune des enceintes et chacun des mécanismes. Un couvercle de cuve peut porter plus de cinquante enceintes dans le cas des réacteurs construits actuellement et on ne peut assurer la coïncidence simultanée des parties profilées pour tous les mécanismes correspondants.

Le but de l'invention est donc de proposer un mécanisme à vis et écrou pour la commande d'un réacteur nucléaire par déplacement vertical d'un ensemble absorbant les neutrons dans le coeur du réacteur et chute de l'ensemble absorbant en position d'insertion maximum sous l'effet de son propre poids, pour l'arrêt d'urgence, l'ensemble absorbant étant fixé à l'extrémité inférieure d'une tige reliée à l'un des éléments de l'ensemble vis-écrou mobile en translation verticale, l'autre élément de l'ensemble vis-écrou mobile en rotation pouvant être immobilisé en translation et le mécanisme comportant:

— moteur d'entraînement en rotation de l'élément mobile en rotation de l'ensemble à vis et écrou par l'intermédiaire d'un organe d'entraînement comportant une partie profilée destinée à venir en prise avec une partie correspondante de l'élément mobile en rotation de l'ensemble vis-écrou pour solidariser l'organe d'entraînement et l'élément en rotation, et
— un grappin muni de doigts pivotants pour le maintien en translation de l'élément mobile en rotation de l'ensemble vis-écrou et pour la commande de chute de l'ensemble vis-écrou, de la tige et de l'ensemble absorbant, lors de l'arrêt d'urgence,

le moteur et le grappin étant fixés sur une enceinte étanche en communication avec l'intérieur du réacteur solidaire du couvercle de la cuve renfermant le coeur de ce réacteur et disposés au moins partiellement dans cette enceinte, mécanisme qui permette de remettre en place le couvercle de la cuve sans difficulté après le rechargement du réacteur, les ensembles à vis et écrou étant séparés des enceintes étanches.

Dans ce but, l'organe d'entraînement de l'élément mobile en rotation est constitué par un ensemble de deux chemises montées de façon télescopique l'une à la suite de l'autre dans la direction verticale et assemblées par l'intermédiaire d'un ressort qui se comprime lors des mouvements télescopiques des deux chemises.

Afin de bien faire comprendre l'invention, on va décrire à titre d'exemple non limitatif, un mode de réalisation d'un mécanisme à vis et écrou selon l'invention, dans le cas où ce mécanisme est utilisé pour le déplacement de barres de commande dans un réacteur nucléaire à eau sous pression.

La figure 1 représente, dans une vue en coupe par un plan vertical de symétrie, la partie supérieure du mécanisme au niveau de l'enceinte étanche.

La figure 2 représente, également dans une vue en coupe par un plan vertical de symétrie, la partie inférieure du mécanisme permettant sa liaison avec la barre de commande.

La figure 3 représente, toujours dans une vue en coupe par un plan vertical de symétrie, l'ensemble vis-écrou reposant en position verticale à l'intérieur de la cuve du réacteur, le couvercle de cette cuve étant enlevé.

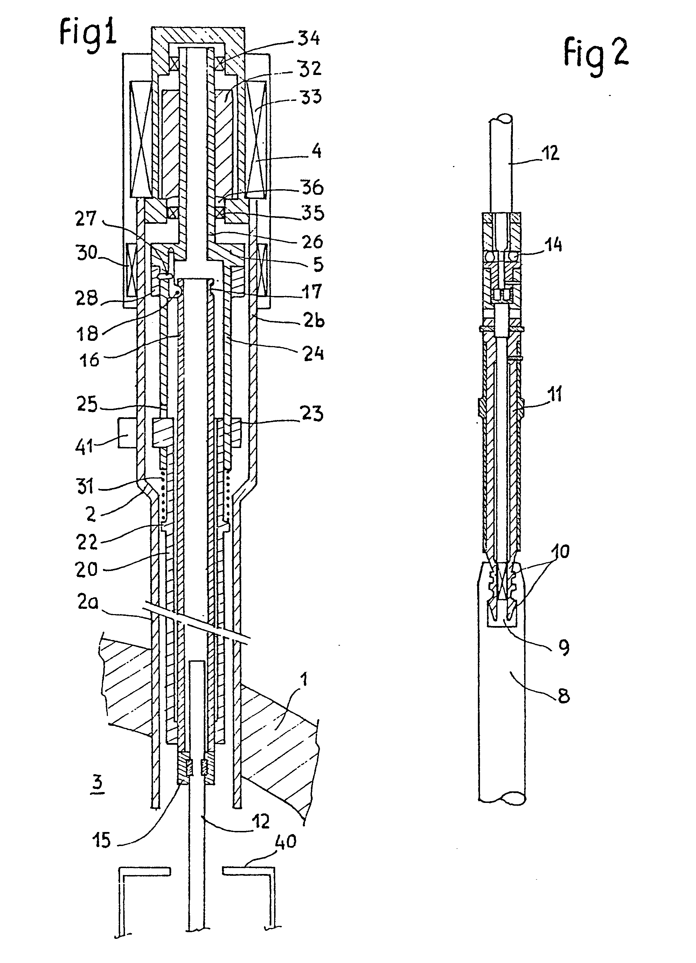

Sur la figure 1, on voit le couvercle 1 de la cuve sur lequel est disposé l'enceinte étanche 2 communiquant avec l'intérieur de la cuve 3 du réacteur et prolongeant vers le haut le couvercle 1 de la cuve.

La virole inférieure 2a de cette enceinte étanche traverse le couvercle 1 sur toute son épaisseur et débouche dans l'espace interne de la cuve 3. Dans la partie supérieure 2b de cette enceinte étanche sont disposés d'une part le moteur 4 d'entraînement de la partie mobile en rotation de l'ensemble vis-écrou et d'autre part le grappin 5 permettant le maintien en position verticale de l'ensemble vis-écrou dans sa position permettant le déplacement vertical de la barre de commande.

On voit sur la figure 2, le pommeau 8 de la barre de commande qui comporte à sa partie supérieure une ouverture 9 dans laquelle viennent s'engager les doigts 10 formant la partie inférieure d'un manchon d'accouplement 11, pour la liaison du manchon 11 jouant le rôle de tige du suspension de la barre de commande, avec cette barre de commande.

La tige d'accouplement 11 est reliée à sa partie supérieure à la partie inférieure de la vis 12 de grande longueur permettant le déplacement contrôlé de la barre de commande.

La vis 12 est reliée à la tige de liaison 11 par l'intermédiaire d'un coupleur à billes 14 qui permet d'éviter la transmission à la barre de commande de couples trop importants en cas de blocage accidental de l'ensemble vis-écrou.

La vis 12 engrène avec un écrou à rouleaux planétaires 15.

L'écrou à rouleaux 15 est fixé à la partie inférieure d'un tube porte-écrou 16 comportant à sa partie supérieure des ouvertures 17 permettant l'engagement des doigts pivotants 18 du grappin 5 sur la partie supérieure de ce tube porte-écrou pour sa suspension à l'intérieur de l'enceinte étanche.

Sur la figure 1, l'ensemble vis-écrou comportant la vis 12, l'écrou 15 et le tube porte-écrou 16 a été représenté dans sa position permettant le déplacement contrôlé de la barre de commande, les doigts 18 du grappin 5 étant en prise sur la partie supérieure du tube porte-écrou 16. Dans cette position, l'écrou 15 se trouve à un niveau un peu inférieur au niveau du couvercle de cuve 1.

Dans cette position, la partie inférieure du tube porte-écrou 16 est engagée dans une chemise d'actionnement inférieure 20 permettant la mise en rotation du tube porte-écrou et de l'écrou 15. En effet, le tube porte-écrou présente une section polygonale, par exemple, en forme de triangle à angles arrondis, la chemise d'actionnement 20 comportant à sa partie inférieure une ouverture centrale de même forme, si bien que le tube porte-écrou et la chemise d'actionnement sont solidaires en rotation, cependant que des mouvements de translation entre ces deux pièces restent possibles si les doigts 18 sont mis en position rétractée où ils libèrent les cavités 17. La chemise d'actionnement inférieure 20 comporte une saillie annulaire 22 de faible épaisseur et plusieurs saillies radiales 23 qui viennent s'engager dans des lumières 25 prévues dans la surface latérale d'une chemise d'actionnement supérieure 24, elle-même solidaire de l'axe de rotation 26 du moteur 4.

La partie supérieure de la chemise d'actionnement 24 constitue le corps du grappin 5 sur lequel sont montés les doigts pivotants 18 actionnés par l'intermédiaire de biellettes 27 articulées d'une part sur les doigts 18 et d'autre part sur une pièce magnétique 28 de forme annulaire et montée coulissante sur la surface externe de la chemise 24.

Les doigts pivotants du grappin sont actionnés par une bobins 30 disposée à l'extérieur de l'enceinte étanche 2 et autour de cette enceinte.

Lorsque la bobine 30 est alimentée, les doigts pivotants 18 sont en position de fermeture où leurs extrémités sont engagés dans les cavités 17 du tube porte-écrou 16 pour maintenir ce tube porte-écrou en position haute comme représenté à la figure 1. Si l'on coupe le courant d'alimentation de la bobins 30, la pièce annulaire 28 retombe en entraînant les biellettes 27 qui actionnent les doigts 18 pour leur ouverture.

Les chemises 20 et 24 solidarisées en rotation par l'intermédiaire des saillies radiales 23 engagées dans les lumières 25 constituent l'organe d'entraînement en rotation de l'écrou 15 solidaire de l'axe 26 du moteur 4.

Un ressort 31 est intercalé entre la saillie annulaire 22 et le base de la chemise 24, ce ressort se comprimant lors des déplacements relatifs entre les chemise 20 et 24, les saillies 23 se déplaçant dans les lumières 25.

Le moteur 4 qui occupe la partie supérieure de l'enceinte 2b comporte un rotor 32 noyé dans le fluide remplissant l'enceinte sous pression et un stator 33 disposé autour de l'enceinte et à l'extérieur de celle-et.

Le rotor 32 est solidaire de l'axe 26 du moteur qui est mouté rotatif dans l'enceinte par l'intermédiaire de paliers 34 et 35.

Le moteur 4 est un moteur pas à pas comportant un dispositif de freinage du rotor qui permet de réaliser le maintien en position de la barre de commande, lorsque le stator n'est pas alimenté.

Ce dispositif de freinage du rotor est constitué de la façon suivante: le rotor 32 est monté coulissant sur l'arbre 26 et solidaire en rotation de cet arbre 26. Lorsque le stator n'est pas alimenté, le rotor repose sur un siège conique 36 qui joue le rôle de frein. Le rotor est alors légèrement décalé vers le bas par rapport au stator. Lorsqu'on excite le stator, le rotor remonte, reprend la position dans laquelle la réluctance est minimale et le frein se trouve ainsi débloqué.

Pour maintenir le rotor en position, il suffit donc de couper l'alimentation du stator du moteur 4.

Lorsque le stator est alimenté de manière statique, le frein se débloque par remontée du rotor et l'on peut alors alimenter le stator de façon à exciter cycliquement les différentes phases de ce stator pour mettre en marche le rotor dans un mouvement de rotation pas à pas.

Le tube porte-écrou 16 est alors entraîné dans un mouvement de rotation par l'intermédiaire de l'arbre 26 et de l'organe d'entraînement constitué par les chemises 20 et 24. L'écrou 15 est alors mis en rotation suivant un mouvement pas à pas qui est converti en mouvement de translation de la vis 12 qui engrène avec l'écrou 15 et qui est immobilisée en rotation par le fait que sa partie inférieure est solidaire de la tige de liaison 11 qui est elle-même solidaire de la barre de commande introduite dans le coeur du réacteur.

Pendant ces mouvements de translation verticale, l'extrémité supérieure de la vis 12 se déplace à l'intérieur du tube porte-écrou 16 et éventuellement à l'intérieur de l'arbre creux 26 pour permettre un déplacement de la vis dont le filetage est usiné sur une longueur voisine de la longueur des éléments combustibles, avec une amplitude totale de déplacement correspondant à la longueur de ce filetage.

L'écrou 15 étant légèrement en dessous du couvercle de cuve 1, la hauteur de la chambre étanche 2 peut être limitée à un valeur légèrement inférieure à l'amplitude totale du mouvement de la barre de commande.

D'autre part, en coupant l'alimentation du stator lorsque la position recherchée pour la barre de commande est atteinte, on provoque un maintien en position de cette barre de commande, sans aucune consommation de courant au niveau du moteur 4. Il suffit de maintenir l'alimentation de la bobine 30 pour maintenir l'ensemble vis-écrou et la barre de commande en position verticale.

D'autre part, il est très facile de déterminer la position de la barre de commande à un instant quelconque en repérant la position de l'extrémité supérieure de la vis 12 dans le puits constitué par le tube porte-écrou 16 et l'arbre creux 26. On peut ainsi déterminer de façon très précise la position de la barre de commande à un instant quelconque.

Il suffit évidemment d'alimenter le moteur pas à pas pour le faire tourner dans un sens ou dans l'autre pour obtenir une montée ou une descente de la barre de commande dans le coeur du réacteur.

Des contacts de fin de course électriques actionnés à partir des informations délivrées par le dispositif de détection de position de la vis permettent d'autre part de limiter les courses haute et basse de la vis en fin de mouvement de cette vis, dans un sens et dans l'autre. On peut prévoir également des fins de courses mécaniques pour le cas où les contacts fin de course actionnés par les informations du dispositif de détection de position seraient défaillants.

Pour déclencher la chute de la barre en position d'insertion maximum dans le coeur du réacteur, par example en cas d'arrêt d'urgence, il suffit de couper l'alimentation de la bobine 30 pour que le grappin 5 libère le tube porte-écrou 16. L'ensemble vis-écrou portant la barre de commande chute alors dans le réacteur jusqu'au moment ou la barre de commande vient reposer sur la base du coeur en position d'insertion maximum. Au cours de cette chute de l'ensemble vis-écrou, le tube porte-écrou est guidé par la partie intérieure de la chemise 20, ce qui permet d'éviter tout mouvement de rotation de cet ensemble et de la barre de commande puisque le dispositif d'entraînement constitué par les chemises 20 et 24 est lui-même immobilisé en rotation par le dispositif de blocage du moteur 4, l'alimentation du stator de ce moteur ayant été coupée. Si le stator est alimenté pendant cette manoeuvre, le couple statique exercé sur le rotor est également suffisant pour éviter toute rotation de l'ensemble vis-écrou et de la grappe.

On prévoit la longuer du tube porte-écrous pour que l'extrémité supérieure de ce tube dont la section extérieure a une forme polygonale à angles arrondis reste engagée dans la partie inférieure de la chemise 20, quelle que soit la position de la vis au départ de la manoeuvre de chute de la barre de commande.

Ceci permet de remettre le dispositif vis-écrou en position de fonctionnement après une manoeuvre de chute, de la barre de commande, en actionnant le moteur 4 dans le sens de la descente de la vis. Comme cette vis se trouve dans l'impossibilité de descendre, puisque la barre de commande est en appui sur l'assemblage combustible, il en résulte une remontée de l'écrou et du tube porte-écrou jusqu'à ce que celui-ci atteigne le niveau du grappin 5. Un contact de fin de course arrête alors la rotation du moteur et l'on réalimente la bobine 30 du grappin 5. Le tube porte-écrou est donc à nouveau suspendu au grappin et le mécanisme est prêt pour un fonctionnement normal de déplacement de la barre de commande.

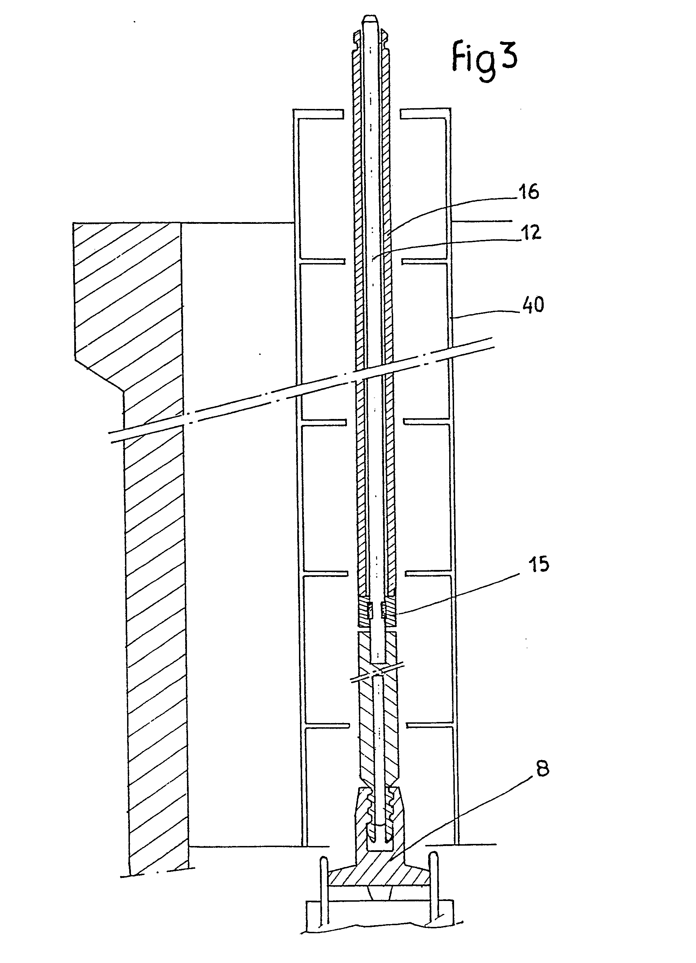

Lorsqu'on désire ouvrir le couvercle de la cuve, par exemple pour effectuer un rechargement du réacteur en combustible, opération au cours de laquelle on effectue également une vérification et un entretien des mécanismes, on provoque tout d'abord une chute de l'ensemble des barres de commandes en position d'insertion maximum en coupant l'alimentation des bobines 30 des grappins et l'on descend l'ensemble des écrous 15 en position basse comme représenté à la figure 3.

Pour effectuer cette manoeuvre de descente des écrous 15 en position basse, on fait tourner les rotors des moteurs 4 dans le sens de montée des vis, ce qui provoque la descente des écrous puisque ces écrous sont libres à la fois en rotation et en translation, les grappins n'étant plus en prise sur la partie supérieure des tubes port écrou.

Dans cette position de l'ensemble vis-écrou telle que représentée à la figure 3 le filetage des vis est protégé sur toute sa longueur par le tube port-écrou ce qui évite tout risque de détérioration lors des opérations de manutention de ces ensembles.

Lors du levage du couvercle, 1, l'ensemble vis-écrou solidaire de la barre de commande reste à l'intérieur de la cuve de réacteur à l'intérieur du guide de grappe 40. En effet, l'ensemble vis-écrou n'est maintenu à l'intérieur de l'enceinte étanche, lors du fonctionnement normal, que par le grappin 5.

Lors du levage du couvercle de la cuve, l'enceinte étanche et les parties du mécanisme qui sont fixées sur cette enceinte, c'est-à-dire le moteur 4, le grappin 5 et l'organe d'entraînement 24, sont entièrement séparés de l'ensemble vis-écrou, le tube porte-écrou coulissant à l'intérieur de la partie inférieure de la chemise 20 sur la petite longueur de ce tube restant engagé à l'intérieur de la chemise 20.

L'ensemble vis-écrou est alors dans la position représentée sur la figure 3 à l'intérieur du guide de grappe 40.

Il est alors possible de procéder au désaccouplement manuel des barres de commande et de procéder au rechargement en combustible du réacteur.

Pendant les opérations de rechargement, les ensembles vis-écrous peuvent être laissés en place dans les guides de grappe ce qui simplifie considérablement les manutentions.

D'autre part, il est extrêmement facile de vérifier l'état des vis et des écrous qui sont les parties sensibles des mécanismes de commande et d'en effectuer la réparation si cela est nécessaire.

Lorsque l'opération de rechargement est terminée, on procède au réaccouplement des tiges de laision 11 et des pommeaux des grappes de commande et l'on remet le couvercle de cuve en place, la partie supérieure des tubes porte-écrou 16 venant en butée contre la partie inférieure de la chemise 20 puisqu'on ne peut assurer la concordance des profils du tube porte-écrous et de la partie centrale creuse de la chemise 20.

On a donc prévu un montage télescopique des chemises 20 et 24, avec un coulissement d'une amplitude déterminée par la longueur des lumières 25, de façon qu'on puisse fermer le couvercle de cuve sans que les tubes porte-écrous soient engagés dans les chemises inférieures 20.

Le couvercle de cuve étant fermé, on fait tourner le rotor du moteur 4 à vitesse lente de façon que lorsque la concordance de profil entre le tube porte-écrous et la chemise est réalisée, le ressort 31 provoque l'engagement de l'extrémité du tube porte-écrou à l'intérieur de la chemise inférieure 20.

Un capteur 41 disposé à l'extérieur de l'enceinte étanche 2 permet de vérifier le déroulement correct de cette opération de réengagement.

On peut alors provoquer la remontée du tube porte-écrou et l'engagement des doigts du grappin sur la partie supérieure de ce tube, comme dans le cas des opérations suivant un arrêt d'urgence.

Le mécanisme est alors prêt à fonctionner de nouveau pour la commande du réacteur.

On voit que les principaux avantages du dispositif suivant l'invention sont de permettre une diminution de la hauteur de l'enceinte étanche, par rapport au dispositif antérieur à cliquets où la partie active du mécanisme était obligatoirement disposée à l'intérieur de l'enceinte et de faciliter le contrôle et l'entretien de la partie importante du mécanisme en permettant une séparation complète de l'ensemble vis-écrou qui vient reposer dans la cuve du réacteur, lors du démontage du couvercle de cuve.

Le dispositif permet également une remise en place du couvercle sur la cuve sans avoir à assurer une coïncidence parfaite entre les parties profilées du méchanisme, restée dans l'enceinte et prévue sur l'ensemble vis-écrou respectivement.

En particulier, le dispositif qui a été décrit dans l'exemple de réalisation permet grâce à la disposition de l'écrou en dessous du couvercle de la cuve, de réduire considérablement la hauteur des enceintes étanches nécessaires pour la manoeuvre des mécanismes.

Le dispositif suivant l'invention s'applique non seulement pour la commande des réacteurs nucléaires à eau souspression avec des barres ou grappes de commande mais encore à la commande de tout réacteur nucléaire par déplacement vertical d'ensembles absorbants à l'intérieur du coeur de ce réacteur.

**Revendications**

1. Mécanisme à vis et écrou comprenant un ensemble vis-écrou pour la commande d'un réacteur nucléaire par déplacement vertical d'un ensemble absorbant les neutrons dans le coeur du réacteur et chute de l'ensemble absorbant en position d'insertion maximum sous l'effet de son propre poids, pour l'arrêt d'urgence, l'ensemble absorbant étant fixé à l'extrémité inférieure d'une tige reliée à l'un des éléments de l'ensemble vis-écrou (12, 15 16) mobile en translation verticale, l'autre élément de l'ensemble vis-écrou mobile en rotation pouvant être immobilisé en translation et le mécanisme comportant:

— un moteur (4) d'entraînement en rotation de l'élément (15—16) mobile en rotation de l'ensemble à vis et écrou (12, 15—16), par l'intermédiaire d'un organe d'entraînement (20, 24) comportant une partie profilée destinée à venir en prise avec une partie correspondante de l'élément (15—16) mobile en rotation de l'ensemble vis-écrou (12, 15—16) pour solidariser l'organe d'entraînement (20, 24) et l'élément (15—16) en rotation, et

— un grappin (5) muni de doigts pivotants (18) pour le maintien en translation de l'élément mobile en rotation (15—16) de l'ensemble vis-écrou (12, 15—16) et pour la commande de chute de l'ensemble vis-écrou, de la tige et de l'ensemble absorbant, lors de l'arrêt d'urgence,

le moteur (4) et le grappin (3) étant fixés sur une enceinte étanche (2) en communication avec l'intérieur du réacteur solidaire du couvercle (1) de la cuve renfermant le coeur de ce réacteur et disposés au moins partiellement dans cette enceinte (2), caractérisé par le fait que l'organe d'entraînement de l'élément (15—16) mobile en rotation est constitué par un ensemble de deux chemises (20, 24) montées de façon télescopique l'une à la suite de l'autre dans la direction verticale et assemblées par l'intermédiaire d'un ressort (31) qui se comprime lors des mouvements télescopiques des deux chemises (20, 24).

2. Mécanisme à vis et écrou suivant la revendication 1, dans le cas où l'écrou (15) est mobile en rotation et fixé à l'extrémité inférieure d'un tube porte-écrou (16) dont l'extrémité supérieure comporte des organes d'accrochage (17) des doigts (19) du grappin (5), caractérisé par le fait que dans sa position de service où le tube porte-écrou (16) est suspendu au grappin (5), l'ecrou (15) est disposé à un niveau inférieur au couvercle (1) de la cuve du réacteur.

3. Mécanisme à vis et écrou suivant l'une quelconque des revendications 1 et 2, caractérisé par le fait que le moteur d'entraînement (4) de l'ensemble vis-écrou (12, 15—16) est constitué par un moteur pas à pas dont le stator (33) est disposé à l'extérieur et autour de l'enceinte étanche et dont le rotor (32), muni d'un dispositif de freinage par manque de courant, est disposé à l'intérieur de l'enceinte étanche.

4. Mécanisme à vis et écrou suivant l'une quelconque des revendications 1, 2 et 3, caractérisé par le fait que le grappin à doigts pivotants (5) est commandé depuis l'extérieur de l'enceinte (2) par une bobine magnétique (30) qui maintient une pièce d'actionnement magnétique des doigts (18) disposée à l'intérieur de l'enceinte étanche (2) dans une position assurant la fermeture des doigts (18) lorsqu'elle est alimentée.

**Patentansprüche**

1. Schraubentriebwerk mit einem Schraubensystem zur Steuerung einer Kernreaktoranlage durch senkrechte Verschiebung innen in dem Reaktorkern von Neutronen-Absorbermateriel, und zum Schnellschliessen, Fallen des Absorbermaterials unter seinem Eigengewicht in die maximale Einfahrstellung, wobei des Absorbermaterial am unteren Ende einer mit einem senkrecht verfahrbaren Teil des Schraubensystems (12, 15—16) verbundenen Stange befestigt ist, und wobei das andere drehbewegliche Teil des Schraubensystems in der Senkrechtbewegung festgestellt werden kann, bestehend aus:

— einem Motor (4) zum drehbeweglichen Antrieb des drehbaren Teils (15—16) des Schraubensystems (12, 15—16) über ein Antrilbsmittel (20, 24) mit einem Profilabschnitt, der mit einem entsprechenden Abschnitt des drehbeweglichen Teils (15—16) des Schraubensystems (12, 15—16) zum Eingriff kommt, um des Antriebsmittel (20, 24) mit dem Teil (15—16) drehfest zu verbinden, und

— einem Greifer (5) mit schwenkbaren Fingern (18) zur Aufrechterhaltung der Senkrechtbewegung des drehbaren Teils (15—16) des Schraubensystems (12, 15—16) und zum Steuern der Fallbewegung des Schraubensystems, der Stange und des Absorbermaterials beim Schnellschliessen,

wobei der Motor (4) und der Greifer (5) auf einer mit dem Reaktorinneren in Verbindung stehenden dichten Ummantelung (2) befestigt sind, die mit dem Deckel (1) des den Reaktorkern aufnehmenden Druckgefässes fest verbunden ist, und wobei diese mindestens teilweise in dieser Ummantelung (2) untergebracht sind, dadurch gekennzeichnet, daß des Antriebsmittel des drehbeweglichen Teile (15—16) aus zwei in senkrechter Richtung übereinander teleskopartig montierten Buchsen besteht, welche über eine bei den Teleskopbewegungen der beiden Buchsen (20, 24) zusammendrückbare Feder (31) verbunden sind.

2. Schraubentriebwerk nach Anspruch 1, wenn die Mutter (15) drehbar und am unteren Ende einer rohrförmigen Mutterhalterung (16) befestigt ist, deren Oberende zwei Einhängemittel (17) für die Finger (18) des Greifers (5) aufweist, dadurch gekennzeichnet, daß die Mutter (15) in der Betriebsstellung, in welcher die rohrförmige Halterung (16) an dem Greifer (5) eingehängt ist, sich in einer Höhe unter dem Deckel (1) des Reaktordrackgefäßes befindet.

3. Schraubentriebwerk nach einem der Ansprüche 1 und 2, dadurch gekennzeichnet, daß der Motor (4) zum Antrieb des Schreubensystems (12, 15—16) ein Schrittschaltmotor ist, wobei der Stator (33) aussen und um die dichte Ummantelung herum angeordnet ist und der eine Stromausfallbremseinrichtung aufweisende Läufer (32) innen in der dichten Ummentelung untergebracht ist.

4. Schraubentriebwerk nach einem der Ansprüche 1, 2 und 3, dadurch gekennzeichnet, daß der Greifer mit den Schwenkbaren Fingern (5) von außerhalb der Ummantelung (2) über eine Magnetspule (30) gesteuert wird, die bei Stromversorgung ein innen in der dichten Ummentelung (2) angeordnetes Magnetstück zur Betätigung der Finger (18) in einer das Schliessen der Finger (18) gewährleistenden Stellung hält.

**Claims**

1. A screw and nut mechanism comprising a screw-nut assembly for controlling a nuclear reactor by vertical displacement of a unit absorbing the neutrons in the core of the reactor and fall of the absorbing unit into a position of maximum insertion under the action of its own weight, for emergency stoppage, the absorbing unit being fixed at the lower end of a shaft connected to one of the vertically translationally movable components of the screw-nut assembly (12, 15—16), the other, rotationally movable, component of the screw-nut assembly being capable of being immobilised in translation, and the mechanism comprising,

— a motor (4) for driving in rotation the rotationally movable component (15—16) of the screw and nut assembly (12, 15—16), through the intermediacy of a driving element (20, 24) comprising a profiled part intended to engage with a corresponding part of the rotationally movable component (15—16) of the screw-nut assembly (12, 15—16) to unite integrally in rotation the driving element (20, 24) and the component (15—16), and
— a grab (5) provided with swivelling fingers (18) for holding in translation the rotationally movable component (15—16) of the screw-nut assembly (12, 15—16) and for controlling the fall of the screw-nut assembly, of the shaft and of the absorbing unit, at the time of the emergency stoppage,

the motor (4) and the grab (5) being fixed on a leakproof enclosure (2) communicating with the interior of the reactor and fixed integrally to the cover (1) of the vessel enclosing the core of this reactor, the motor and the grab being arranged at least partly in this enclosure (2), characterised in that the element for driving the rotationally movable component (15—16) consists of an assembly of two jackets (20, 24) mounted telescopically one following the other in the vertical direction and assembled through the intermediacy of a spring (31) which is compressed when the two jackets (20, 24) move telescopically.

2. A screw and nut mechanism according to Claim 1, where the nut (15) is movable in rotation and fixed at the lower end of a nut-carrier tube (16) whose upper end comprises elements for hooking (17) the fingers (18) of the grab (5), characterised in that, in its operating position where the nut-carrier tube (16) is suspended from the grab (5), the nut (15) is positioned at a level below the cover (1) of the reactor vessel.

3. A screw and nut mechanism according to either one of Claims 1 and 2, characterised in that the motor (4) for driving the screw-nut assembly (12, 15—16) consists of a stepping motor whose stator (33) is arranged outside and around the leakproof enclosure and whose rotor (32), equipped with a device for braking in the absence of a current, is arranged inside the leakproof enclosure.

4. A screw and nut mechanism according to any one of Claims 1, 2 and 3, characterised in that the grab (5) with swivelling fingers is controlled from the outside of the enclosure (2) by a magnetic coil (30) which holds a part for actuating the fingers (18) magnetically which is arranged inside the leakproof enclosure (2) in a position ensuring the closing of the fingers (18) while it is energised.

**Fig 1** — 34, 32, 33, 4, 36, 35, 26, 5, 17, 2b, 24, 23, 1, 27, 30, 28, 18, 16, 25, 41, 31, 2, 22, 20, 2a, 3, 15, 12, 40

**Fig 2** — 12, 14, 11, 10, 9, 8

1

Fig 3

16

12

40

15

8